# EUROPEAN PATENT APPLICATION

(11) **EP 4 195 599 A1**
(43) Date of publication of application: **14.06.2023**
(21) Application number: 21859696.3
(22) Date of filing: 14.05.2021
(51) Int. Cl.: H04L 12/437

(54) **COMMUNICATION METHOD AND APPARATUS, AND DEVICE AND SYSTEM**

(30) Priority: 31.08.2020 CN 202010895959
(71) Applicant: Huawei Technologies Co., Ltd., Shenzhen, Guangdong 518129 (CN)
(72) Inventor: HOU, Jianqiang, Shenzhen, Guangdong 518129 (CN)
(74) Representative: Thun, Clemens
(86) International application number: PCT/CN2021/093719
(87) International publication number: WO 2022/041851

(57) **Abstract**

Embodiments of this application disclose a communication method, and a communications apparatus, device, and system. When customer premise equipment has an overlay virtual network instance, a loopback interface is established in the overlay virtual network instance, and an IP address is allocated to the loopback interface. In addition, the customer premise equipment establishes a transmission path to a server side based on the overlay virtual network instance, and sends a packet to the server side by using the transmission path. The packet includes the IP address of the loopback interface, to register with a server by using the IP address, so that the server can identify the customer premise equipment based on the IP address. In the method, when the customer premise equipment sends the packet by using the transmission path, a source address of the sent packet is the IP address of the loopback interface in the overlay virtual network instance. Therefore, the customer premise equipment can register with the server by using the same IP address, so that the server can uniquely identify the customer premise equipment.

## Description

This application claims priority to Chinese Patent Application No. 202010895959.1, filed with the China National Intellectual Property Administration on August 31, 2020 and entitled "COMMUNICATION METHOD, AND COMMUNICATIONS APPARATUS, DEVICE, AND SYSTEM", which is incorporated herein by reference in its entirety.

### TECHNICAL FIELD

This application relates to the field of communication technologies, and in particular, to a communication method, and a communications apparatus, device, and system.

### BACKGROUND

A software-defined wide area network (software-defined wide area network, SD-WAN) is an important practice of software-defined networking (software defined networking, SDN) concepts and design ideas in the wide area network (wide area network, WAN) field. The SD-WAN can provide a simplified, intelligent, and flexible WAN interconnection capability by using a software-defined method. Under the trend of cloud-based enterprise services and Internet-based WAN connections, enterprises flexibly and conveniently can obtain high-quality WANs anytime and anywhere by using the SD-WAN.

In actual SD-WAN deployment scenarios, generally, customer premise equipment (customer premise equipment, CPE) in the SD-WAN registers with and interconnects with a server of a carrier. Generally, the CPE accesses the server by using an Internet protocol (internet protocol, IP) address that is of a WAN port and that corresponds to the CPE, and the server identifies the CPE based on the IP address. However, when the CPE has a plurality of WAN ports and different WAN ports correspond to different IP addresses, the CPE may not uniformly use the same IP address to access the server. As a result, the server cannot identify the CPE based on the IP address.

### SUMMARY

Embodiments of this application provide a communication method, and a communications apparatus, device, and system, to resolve a problem that a server cannot identify CPE based on an IP address.

According to a first aspect, an embodiment of this application provides a communication method. The method includes: Customer premise equipment creates a loopback loopback interface in an overlay overlay virtual network instance, and configures an IP address for the loopback interface. The customer premise equipment establishes a transmission path to a server side based on the overlay virtual network instance. The customer premise equipment sends a packet to the server side by using the transmission path. The packet includes at least the IP address. In this embodiment, when the customer premise equipment sends the packet to the server side, an IP address used by the customer premise equipment is the IP address of the loopback interface created in the overlay virtual network instance, to register with a server by using the IP address, so that the server can identify the customer premise equipment based on the IP address.

In a specific implementation, that the customer premise equipment establishes a transmission path to a server side based on the overlay virtual network instance includes: The customer premise equipment establishes an overlay tunnel from the overlay virtual network instance to the server side; and/or the customer premise equipment establishes an inner-loop tunnel between the overlay virtual network instance and a virtual network instance interworking with the server side. In this embodiment, the transmission path that may be established by the customer premise equipment includes the overlay transmission path and/or the inner-loop tunnel. The overlay tunnel is established based on the overlay virtual network instance. Transmission of the packet on the overlay tunnel is independent of an underlay virtual network. When the overlay tunnel is used to transmit a packet, the IP address of the loopback interface may be encapsulated as an inner IP address, and an IP address of a WAN port may be encapsulated as an outer IP address. Regardless of a specific WAN port by using which the packet is transmitted to the server, the inner IP address is the IP address of the loopback interface, so that the customer premise equipment can register with the server by using the IP address of the loopback interface. The inner-loop tunnel is constructed based on the overlay virtual network instance and the underlay virtual network instance of the customer premise equipment. When the customer premise equipment registers with the server, the customer premise equipment may send the packet to the server by using the established inner-loop tunnel and the WAN port. A source address of the packet is the IP address of the loopback interface, to register with the server by using the IP address.

In a specific implementation, when the server side has a gateway corresponding to the server, that the customer premise equipment establishes an overlay tunnel from the overlay virtual network instance to the server side includes: The customer premise equipment establishes an overlay tunnel from the overlay virtual network instance to the gateway corresponding to the server. That the customer premise equipment sends a packet to the server side by using the transmission path includes: The customer premise equipment sends a packet to the gateway by using the overlay tunnel. In this embodiment, when the server has a corresponding gateway, the overlay tunnel established by the customer premise equipment is an overlay tunnel established from the overlay virtual network instance to the gateway corresponding to the server. In this way, the packet is sent, by using the overlay tunnel, to the gateway corresponding to the server. Then, the gateway forwards the packet to the server.

In a specific implementation, when the server side has at least two servers and each server corresponds to a different gateway, that the customer premise equipment establishes an overlay tunnel from the overlay virtual network instance to the gateway corresponding to the server includes: The customer premise equipment separately establishes, based on the overlay virtual network instance, an overlay tunnel with the gateway corresponding to each server. That the customer premise equipment sends a packet to the gateway by using the overlay tunnel includes: The customer premise equipment sends the packet to the corresponding gateway by using at least one of the overlay tunnels. In this embodiment, when the server side has a plurality of servers and each server corresponds to a different gateway, the customer premise equipment may establish, based on the overlay virtual network instance, an overlay tunnel to the gateway corresponding to each server, to obtain a plurality of overlay tunnels. When sending the packet to the server side, the customer premise equipment may send the packet to the corresponding gateway by using one or more of the established overlay tunnels. When an overlay tunnel is faulty, another overlay tunnel may be used to transmit the packet, to add a fault tolerance mechanism.

In a specific implementation, the at least two servers include an active server and a standby server. That the customer premise equipment sends the packet to the corresponding gateway by using at least one of the overlay tunnels includes: The customer premise equipment sends, by using an overlay tunnel established to a gateway corresponding to the active server, a packet to the gateway corresponding to the active server. When the active server and/or the gateway corresponding to the active server are/is faulty, the customer premise equipment sends, by using an overlay tunnel established to a gateway corresponding to the standby server, a packet to the gateway corresponding to the standby server. In this embodiment, when the server side has a plurality of servers, an active server and a standby server may be configured. The customer premise equipment may send, by preferentially using the overlay tunnel established to the gateway corresponding to the active server, the packet to the gateway corresponding to the active server, and when the active server and/or the gateway corresponding to the active server are/is faulty, may send, by using the overlay tunnel established to the gateway corresponding to the standby server, the packet to the gateway corresponding to the standby server, thereby improving packet transmission reliability.

In a specific implementation, when one server corresponds to at least two gateways, that the customer premise equipment establishes an overlay tunnel from the overlay virtual network instance to the gateway corresponding to the server includes: The customer premise equipment separately establishes, based on the overlay virtual network instance, an overlay tunnel with each gateway corresponding to the server. That the customer premise equipment sends the packet to the server by using the overlay tunnel includes: The customer premise equipment sends the packet to the corresponding gateway by using at least one of the overlay tunnels. In this embodiment, when one server corresponds to a plurality of gateways, the customer premise equipment may establish, based on the overlay virtual network instance, an overlay tunnel with each gateway corresponding to the server. The customer premise equipment may send the packet to the corresponding gateway by using one or more overlay tunnels.

In a specific implementation, the at least two gateways include an active gateway and a standby gateway. That the customer premise equipment sends the packet to the corresponding gateway by using at least one of the overlay tunnels includes: The customer premise equipment sends a packet to the active gateway by using an overlay tunnel established to the active gateway. When the active gateway is faulty, the customer premise equipment sends a packet to the standby gateway by using an overlay tunnel established to the standby gateway. In this embodiment, when one server corresponds to a plurality of gateways, the active gateway and the standby gateway may be configured. The customer premise equipment sends the packet to the active gateway by preferentially using the overlay tunnel established to the active gateway. When the active gateway is faulty, the customer premise equipment sends the packet to the standby gateway by using the overlay tunnel established to the standby gateway.

In a specific implementation, when the customer premise equipment has at least two WAN ports, each WAN port has a corresponding underlay virtual network instance. That the customer premise equipment establishes an overlay tunnel from the overlay virtual network instance to the gateway corresponding to the server includes: The customer premise equipment separately establishes, based on the overlay virtual network instance by using each WAN port, an overlay tunnel with the gateway corresponding to the server. That the customer premise equipment sends a packet to the gateway by using the overlay tunnel includes: The customer premise equipment sends the packet to the gateway by using at least one of the overlay tunnels. In this embodiment, when the customer premise equipment corresponds to a plurality of WAN ports, an overlay tunnel may be separately established for each WAN port with the gateway corresponding to the server, to send the packet to the gateway by using the overlay tunnel.

In a specific implementation, when the at least two WAN ports include an active WAN port and a standby WAN port, that the customer premise equipment sends a packet to the gateway by using the overlay tunnel includes: The customer premise equipment sends a packet to the gateway by using an overlay tunnel established between the active WAN port and the gateway. When a link of the active WAN port is faulty, the customer premise equipment sends a packet to the gateway by using an overlay tunnel established between the standby WAN port and the gateway. In this implementation, when the customer premise equipment has a plurality of WAN ports, the active WAN port and the standby WAN port may be configured. The customer premise equipment may send the packet to the gateway by preferentially using the overlay tunnel established between the active WAN port and the gateway. When the link is faulty for the active WAN port, the customer premise equipment may send the packet to the gateway by using the overlay tunnel established between the standby WAN port and the gateway.

In a specific implementation, to ensure packet transmission security, when an underlay underlay network type corresponding to the WAN port of the customer premise equipment is a preset network type, before the customer premise equipment sends the packet to the gateway by using the overlay tunnel, the method further includes: The customer premise equipment encrypts the packet to obtain the encrypted packet.

In a specific implementation, that the customer premise equipment establishes an inner-loop tunnel between the overlay virtual network instance and a virtual network instance interworking with the server side includes: The customer premise equipment establishes the inner-loop tunnel with an underlay virtual network instance based on the overlay virtual network instance. The underlay virtual network instance is associated with the WAN port of the customer premise equipment. The WAN port interworks with the server by using an underlay network. That the customer premise equipment sends a packet to the server side by using the transmission path includes: The customer premise equipment sends the packet to the server by using the inner-loop tunnel and the underlay network. In this embodiment, when the customer premise equipment has the underlay virtual network instance interworking with the server side, the customer premise equipment may establish the inner-loop tunnel with the underlay virtual network instance based on the overlay virtual network instance, to send the packet to the server by using the inner-loop tunnel and the underlay virtual network.

In a specific implementation, when the customer premise equipment has at least two WAN ports and different WAN ports are bound to different underlay virtual network instances, that the customer premise equipment establishes the inner-loop tunnel with an underlay virtual network instance based on the overlay virtual network instance includes: The customer premise equipment separately establishes, based on the overlay virtual network instance, an inner-loop tunnel with an underlay virtual network instance corresponding to each WAN port. That the customer premise equipment sends the packet to the server by using the inner-loop tunnel and the underlay network includes: The customer premise equipment sends the packet to the server by using at least one of the inner-loop tunnels and an underlay network corresponding to the inner-loop tunnel. In this embodiment, when the customer premise equipment has a plurality of WAN ports, the customer premise equipment may establish, for each WAN port, the inner-loop tunnel between the overlay virtual network instance and the underlay virtual network instance corresponding to the WAN port. The customer premise equipment may send the packet to the server by using one or more inner-loop tunnels and the underlay network corresponding to the inner-loop tunnel.

In a specific implementation, the at least two WAN ports include the active WAN port and the standby WAN port. An inner-loop tunnel established with an underlay virtual network instance corresponding to the active WAN port is an active inner-loop tunnel. An inner-loop tunnel established with an underlay virtual network instance corresponding to the standby WAN port is a standby inner-loop tunnel. That the client sends the packet to the server by using at least one of the inner-loop tunnels and an underlay network corresponding to the inner-loop tunnel includes: The customer premise equipment sends the packet to the server by using the active inner-loop tunnel and an underlay network corresponding to the active WAN port. When a link of the active WAN port is faulty, the customer premise equipment sends the packet to the server by using the standby inner-loop tunnel and an underlay network corresponding to the standby WAN port. In this embodiment, when the customer premise equipment corresponds to a plurality of WAN ports, the active WAN port and the standby WAN port may be configured. The inner-loop tunnel corresponding to the active WAN port is an active inner-loop tunnel, and the inner-loop tunnel corresponding to the standby WAN port is a standby inner-loop tunnel. The customer premise equipment sends the packet to the server by preferentially using the active inner-loop tunnel and the underlay network corresponding to the active WAN port. When the link of the active WAN port is faulty, the customer premise equipment sends the packet to the server by using the standby inner-loop tunnel and the underlay network corresponding to the standby WAN port.

In a specific implementation, when the customer premise equipment has both the overlay tunnel and the inner-loop tunnel, the customer premise equipment sends the packet to the server side by preferentially using the overlay tunnel. In other words, a priority of the overlay tunnel is higher than that of the inner-loop tunnel.

In a specific implementation, when a gateway corresponding to the server side is faulty, the method further includes: The customer premise equipment switches from the overlay tunnel to the inner-loop tunnel.

In a specific implementation, the overlay virtual network instance is a service virtual network instance in the customer premise equipment. The service virtual network instance is an overlay virtual network instance. Alternatively, the overlay virtual network instance is an overlay virtual network instance newly established by the customer premise equipment. In this embodiment, when the customer premise equipment establishes the overlay tunnel or the inner-loop tunnel, the overlay virtual network instance used by the customer premise equipment may be an overlay virtual network instance existing in the customer premise equipment, or may be a newly established overlay virtual network instance.

In a specific implementation, the packet further includes an IP address corresponding to the WAN port.

In a specific implementation, when network address translation exists in a network connected to the WAN port corresponding to the customer premise equipment, the IP address configured for the loopback interface is a public network IP address. In this embodiment, the IP address of the loopback interface may be directly configured as the public IP address, and network address translation is not required, to avoid a problem in which the server cannot identify the customer premise equipment because the IP address in the packet is translated into the public IP address due to network address translation.

According to a second aspect, an embodiment of this application provides a communication method. The method includes: A gateway receives a packet sent by customer premise equipment. The packet includes an IP address of a loopback interface in the customer premise equipment. The loopback interface is located in an overlay virtual network instance in the customer premise equipment. The gateway parses the packet to obtain the IP address, and sends the IP address to a server, so that the server identifies the customer premise equipment based on the IP address.

In a specific implementation, when the packet is an encrypted packet, before the gateway parses the packet, the method further includes: The gateway decrypts the packet.

According to a third aspect, an embodiment of this application provides a communications apparatus. A creating unit is configured to: create a loopback interface in an overlay virtual network instance, and configure an IP address for the loopback interface. An establishment unit is configured to establish a transmission path to a server side based on the overlay virtual network instance. A sending unit is configured to send a packet to the server side by using the transmission path. The packet includes at least the IP address.

In a specific implementation, the establishment unit is specifically configured to: establish an overlay tunnel from the overlay virtual network instance to the server side; and/or establish an inner-loop tunnel between the overlay virtual network instance and a virtual network instance interworking with the server side.

In a specific implementation, when the server side has a corresponding gateway, the establishment unit is specifically configured to establish an overlay tunnel from the overlay virtual network instance to the gateway corresponding to the server side.

The sending unit is specifically configured to send a packet to the gateway by using the overlay tunnel.

In a specific implementation, when the server side has at least two servers and each server corresponds to a different gateway, the establishment unit is specifically configured to separately establish, based on the overlay virtual network instance, an overlay tunnel with the gateway corresponding to each server. The sending unit is specifically configured to send the packet to the corresponding gateway by using at least one of the overlay tunnels.

In a specific implementation, when the at least two servers include an active server and a standby server, the sending unit is specifically configured to: send, by using an overlay tunnel established to a gateway corresponding to the active server, a packet to the gateway corresponding to the active server, and when the active server and/or the gateway corresponding to the active server are/is faulty, send, by the customer premise equipment by using an overlay tunnel established to a gateway corresponding to the standby server, a packet to the gateway corresponding to the standby server.

In a specific implementation, when one server corresponds to at least two gateways, the establishment unit is specifically configured to separately establish, based on the overlay virtual network instance, an overlay tunnel with each gateway corresponding to the server. The sending unit is specifically configured to send the packet to the corresponding gateway by using at least one of the overlay tunnels.

In a specific implementation, the at least two gateways include an active gateway and a standby gateway, and the sending unit is specifically configured to: send a packet to the active gateway by using an overlay tunnel established to the active gateway, and when the active gateway is faulty, send a packet to the standby gateway by using an overlay tunnel established to the standby gateway.

In a specific implementation, when the apparatus has at least two WAN ports, each WAN port has a corresponding underlay virtual network instance, and the establishment unit is specifically configured to separately establish, based on the overlay virtual network instance by using each WAN port, an overlay tunnel with the gateway corresponding to the server. The sending unit is specifically configured to send the packet to the gateway by using at least one of the overlay tunnels.

In a specific implementation, when the two WAN ports include an active WAN port and a standby WAN port, the sending unit is specifically configured to: send a packet to the gateway by using an overlay tunnel established between the active WAN port and the gateway, and when the active WAN port is faulty, send a packet to the gateway by using an overlay tunnel established between the standby WAN port and the gateway.

In a specific implementation, when an underlay network type corresponding to the WAN port of the customer premise equipment is a preset network type, the apparatus further includes: an encryption unit, configured to: before the packet is sent to the gateway by using the overlay tunnel, encrypt the packet to obtain the encrypted packet.

In a specific implementation, the establishment unit is specifically configured to establish the inner-loop tunnel with an underlay virtual network instance based on the overlay virtual network instance. The underlay virtual network instance is associated with the WAN port of the customer premise equipment. The WAN port interworks with the server by using an underlay network. The sending unit is specifically configured to send the packet to the server by using the inner-loop tunnel and the underlay network.

In a specific implementation, when the customer premise equipment has at least two WAN ports and different WAN ports are bound to different underlay virtual network instances, the establishment unit is specifically configured to separately establish, based on the overlay virtual network instance, an inner-loop tunnel with an underlay virtual network instance corresponding to each WAN port. The sending unit is specifically configured to send the packet to the server by using at least one of the inner-loop tunnels and an underlay network corresponding to the inner-loop tunnel.

In a specific implementation, the at least two WAN ports include the active WAN port and the standby WAN port. An inner-loop tunnel established with an underlay virtual network instance corresponding to the active WAN port is an active inner-loop tunnel. An inner-loop tunnel established with an underlay virtual network instance corresponding to the standby WAN port is a standby inner-loop tunnel. The sending unit is specifically configured to: send the packet to the server by using the active inner-loop tunnel and an underlay network corresponding to the active WAN port, and when the active WAN port is faulty, send the packet to the server by using the standby inner-loop tunnel and an underlay network corresponding to the standby WAN port.

In a specific implementation, when an overlay tunnel and an inner-loop tunnel exist, a priority of the overlay tunnel is higher than that of the inner-loop tunnel.

In a specific implementation, when a gateway corresponding to the server side is faulty, the apparatus further includes: a switching unit, configured to switch from the overlay tunnel to the inner-loop tunnel.

In a specific implementation, the overlay virtual network instance is a service virtual network instance in the communications apparatus. The service virtual network instance is an overlay virtual network instance. Alternatively, the overlay virtual network instance is an overlay virtual network instance newly established by the communications apparatus.

In a specific implementation, the packet further includes an IP address corresponding to the WAN port.

In a specific implementation, when network address translation exists in a network connected to the WAN port corresponding to the communications apparatus, the IP address configured for the loopback interface is a public network IP address.

According to a fourth aspect, an embodiment of this application provides a communications apparatus. The apparatus includes: a receiving unit, configured to receive a packet sent by customer premise equipment, where the packet includes an IP address of a loopback interface in the customer premise equipment, and the loopback interface is located in the overlay virtual network instance in the customer premise equipment; a parsing unit, configured to parse the packet to obtain the IP address; and a sending unit, configured to send the IP address to a server, so that the server identifies the customer premise equipment based on the IP address.

In a specific implementation, when the packet is an encrypted packet, the apparatus further includes: a decryption unit, configured to decrypt the packet before the packet is parsed.

According to a fifth aspect, an embodiment of this application provides a communications device. The device includes a processor and a memory. The memory is configured to store instructions. The processor is configured to execute the instructions in the memory, to perform the method according to the first aspect.

According to a sixth aspect, an embodiment of this application provides a gateway. The gateway includes a processor and a memory. The memory is configured to store instructions. The processor is configured to execute the instructions in the memory, to perform the method according to the second aspect.

According to a seventh aspect, an embodiment of this application provides a communications system. The system includes customer premise equipment and a server. The customer premise equipment is configured to: create a loopback interface in an overlay virtual network instance, and configure an IP address for the loopback interface; establish a transmission path to a server side based on the overlay virtual network instance; and send a packet to a server by using the transmission path, where the packet includes at least the IP address. The server is configured to identify the customer premise equipment based on the IP address in the packet.

In a specific implementation, the customer premise equipment is specifically configured to: establish an overlay tunnel from the overlay virtual network instance to the server side; and/or establish an inner-loop tunnel between the overlay virtual network instance and a virtual network instance interworking with the server side.

In a specific implementation, the system further includes a gateway. The gateway communicates with the server. The customer premise equipment is specifically configured to: establish an overlay tunnel from the overlay virtual network instance to the gateway corresponding to the server; and send the packet to the gateway by using the overlay tunnel. The gateway is configured to: parse the packet to obtain the IP address, and send the IP address to the server.

In a specific implementation, the system includes an active gateway and a standby gateway. The active gateway and the standby gateway both communicate with the server. The customer premise equipment is specifically configured to: send a packet to the active gateway by using an overlay tunnel established to the active gateway, and when the active gateway is faulty, send a packet to the standby gateway by using an overlay tunnel established to the standby gateway.

In a specific implementation, the customer premise equipment is specifically configured to: establish the inner-loop tunnel with an underlay virtual network instance based on the overlay virtual network instance, where the underlay virtual network instance is associated with a WAN port of the customer premise equipment, and the WAN port interworks with the server by using an underlay network; and send the packet to the server by using the inner-loop tunnel and the underlay network.

In a specific implementation, when a gateway corresponding to the server side is faulty, the customer premise equipment is further configured to switch from the overlay tunnel to the inner-loop tunnel.

According to an eighth aspect, an embodiment of this application provides a computer readable storage medium including instructions. When the instructions are run on a computer, the computer is enabled to perform the method according to the first aspect and/or the second aspect.

In the communication method provided in the embodiments of this application, when the customer premise equipment has the overlay virtual network instance, the loopback interface is established in the overlay virtual network instance, and the IP address is allocated to the loopback interface. In addition, the customer premise equipment establishes the transmission path to the server side based on the overlay virtual network instance, and sends the packet to the server side by using the transmission path. The packet includes the IP address of the loopback interface, to register with the server by using the IP address, so that the server can identify the customer premise equipment based on the IP address.

The transmission path may include the overlay tunnel and/or the inner-loop tunnel. The overlay tunnel is established based on the overlay virtual network instance. Transmission of the packet on the overlay tunnel is independent of an underlay virtual network. When the overlay tunnel is used to transmit a packet, the IP address of the loopback interface may be encapsulated as an inner IP address, and an IP address of a WAN port may be encapsulated as an outer IP address. Regardless of a specific WAN port by using which the packet is transmitted to the server, the inner IP address is the IP address of the loopback interface, so that the customer premise equipment can register with the server by using the IP address of the loopback interface. The inner-loop tunnel is constructed based on the overlay virtual network instance and the underlay virtual network instance of the customer premise equipment. When the customer premise equipment registers with the server, the customer premise equipment may send the packet to the server by using the established inner-loop tunnel and the WAN port. A source address of the packet is the IP address of the loopback interface, to register with the server by using the IP address. When the customer premise equipment has a plurality of WAN ports, regardless of whether the plurality of WAN ports correspond to the same underlay virtual network instance, an inner-loop tunnel may be established for the underlay virtual network instance corresponding to each WAN port. Regardless of a specific inner-loop tunnel by using which registration with the server is implemented, a source address of the sent packet is the IP address of the loopback interface in the overlay virtual network instance. Therefore, the customer premise equipment can register with the server by using the same IP address, so that the server can uniquely identify the customer premise equipment.

### BRIEF DESCRIPTION OF DRAWINGS

To describe the technical solutions in embodiments of this application or in a conventional technology more clearly, the following briefly describes the accompanying drawings used to describe the embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of a conventional registration scenario;
FIG. 2 is a flowchart of a communication method according to an embodiment of this application;
FIG. 3 is a flowchart of another communication method according to an embodiment of this application;
FIG. 4a is a schematic diagram of establishing an overlay tunnel according to an embodiment of this application;
FIG. 4b is another schematic diagram of establishing an overlay tunnel according to an embodiment of this application;
FIG. 4c is still another schematic diagram of establishing an overlay tunnel according to an embodiment of this application;
FIG. 4d is yet another schematic diagram of establishing an overlay tunnel according to an embodiment of this application;
FIG. 4e is still yet another schematic diagram of establishing an overlay tunnel according to an embodiment of this application;
FIG. 5 is a flowchart of still another communication method according to an embodiment of this application;
FIG. 6a is a schematic diagram of establishing an inner-loop tunnel according to an embodiment of this application;
FIG. 6b is another schematic diagram of establishing an inner-loop tunnel according to an embodiment of this application;
FIG. 6c is still another schematic diagram of establishing an inner-loop tunnel according to an embodiment of this application;
FIG. 6d is yet another schematic diagram of establishing an inner-loop tunnel according to an embodiment of this application;
FIG. 7 is a diagram of a structure of a communications apparatus according to an embodiment of this application;
FIG. 8 is a diagram of a structure of another communications apparatus according to an embodiment of this application;
FIG. 9 is a diagram of a structure of a communications system according to an embodiment of this application; and
FIG. 10 is a diagram of a structure of a communications device according to an embodiment of this application.

### DESCRIPTION OF EMBODIMENTS

To make a person skilled in the art understand the technical solutions in the present invention better, the following clearly and fully describes the technical solutions in the embodiments of the present invention with reference to the accompanying drawings in the embodiments of the present invention. It is clear that the described embodiments are merely a part rather than all of the embodiments of the present invention.

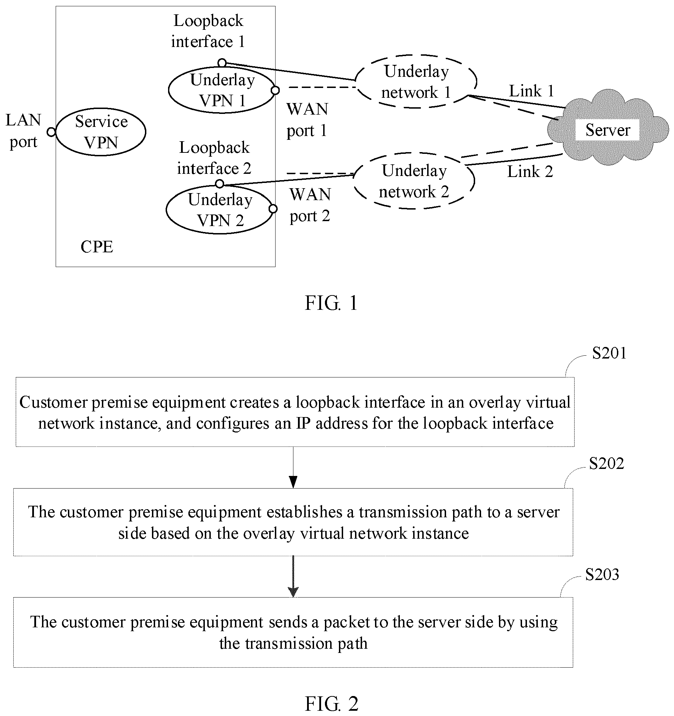

When conventional CPE registers with a server, the registration may be implemented by using an IP address of a WAN port. In addition, the CPE may further create a loopback (loopback) interface in an underlay (underlay) virtual network VPN instance and use an IP address corresponding to the loopback interface for registration. For example, as shown in FIG. 1, a loopback interface 1 is created in an underlay VPN 1. An IP address corresponding to the loopback interface 1 is used for registration with a server by using a WAN port 1. In other words, registration with the server may be implemented by using a link formed by using the WAN port 1 and an underlay network 1. However, when the CPE has a plurality of WAN ports and each WAN port corresponds to a different underlay virtual network instance, the loopback interface corresponds to only one underlay virtual network instance. In this case, when the WAN port 1 is faulty, the CPE switches to a WAN port 2, to implement registration by using an IP address of a loopback interface 2 in an underlay virtual network instance corresponding to the WAN port 2. There still is an IP address switching problem. In this case, the server cannot uniquely identify the CPE.

In addition, when network address translation (network address translation, NAT) exists the network corresponding to the WAN port, the IP address that is of the packet sent to the server after NAT processing and that finally arrives at the server is not the IP address of the loopback interface. As a result, the CPE still cannot be identified. The NAT indicates a manner in which a small quantity of public IP addresses are used to indicate a relatively large quantity of private IP addresses. In other words, a plurality of private IP addresses may be mapped to the same public IP address.

On this basis, an embodiment of this application provides a communication method, to resolve the following problem: When CPE registers with a server, the server cannot perform identification due to translation of a source IP address.

For ease of understanding of the embodiments of this application, the following explains technical terms in the embodiments of this application.

An underlay (underlay) network is a network of basic forwarding architecture of a current data center network. The underlay network indicates a physical infrastructure layer provided that any two points on the data center network are reachable.

In the field of network technologies, an overlay (overlay) network indicates a virtualization technology mode overlaid on network architecture. A general framework of the overlay network is to carry applications on a network without large-scale modification of a basic network, and separate the applications from other network services. The overlay network mainly uses IP-based basic network technologies. An overlay network is a virtual network built on the underlay network. Nodes in the overlay network communicate through virtual or logical links. Each virtual or logical link corresponds to a path (Path) of the underlay network and includes a plurality of coherent links. It should be noted that the overlay network and the underlay network are independent of each other. The overlay network uses the underlay network to transmit packets in peer-to-peer (peer-to-peer) manner. How to transmit the packets to a destination node of the overlay network fully depends on a control plane and a data plane of the underlay network. Processing (such as discarding and forwarding) of the packets on an ingress node and an egress node of the overlay network is fully determined by an encapsulation protocol of the overlay network.

A loopback interface is a software-only virtual interface. After the loopback interface is created, a physical layer and a link layer protocol are always in an up state. The loopback interface can be configured with an IP address. To save IP addresses, a system automatically configures a 32-bit subnet mask for the IP address of the loopback interface. The address of the loopback interface is set as source addresses of all IP packets generated by the device. The address of the loopback interface is stable and is a unicast address. Therefore, the address of the loopback interface is usually regarded as a flag of the device. Setting permission or prohibition of packets carrying the address of the loopback interface on an authentication server, a security server, or the like is equivalent to permitting or prohibiting packets generated by a specific device. In this way, a packet filtering rule is simplified. It should be noted that when the loopback interface is used for source address binding, it needs to be ensured that a route between the loopback interface and a peer end is reachable. In addition, any network data packet sent to the loopback interface is considered to be sent to the device. In this case, the device does not further forward these packets.

For ease of understanding of specific implementation of the embodiments of this application, the following provides descriptions with reference to the accompanying drawings.

FIG. 2 is a flowchart of a communication method according to an embodiment of this application. As shown in FIG. 2, the method may include the following steps:
S201: Customer premise equipment creates a loopback interface in an overlay virtual network instance, and configures an IP address for the loopback interface.

In this embodiment, when the customer premise equipment CPE has the overlay virtual network instance, the customer premise equipment may create the loopback interface in the overlay virtual network instance, and configure the IP address for the loopback interface.

The overlay virtual network instance in which the loopback interface is created may be an overlay virtual network instance that already exists in the customer premise equipment and that is used for mutual service access, that is, an overlay virtual network instance associated with a LAN port. In addition, the overlay virtual network instance may alternatively be a newly created overlay virtual network instance, and is independent of the overlay virtual network instance associated with the LAN port.

S202: The customer premise equipment establishes a transmission path to a server side based on the overlay virtual network instance.

In this embodiment, the customer premise equipment may establish the transmission path to the server side based on the overlay virtual network instance. The transmission path may include an overlay tunnel and/or an inner-loop tunnel. The overlay tunnel is a tunnel established between overlay virtual network instances of two different devices. In this embodiment, the customer premise equipment may establish an overlay tunnel from the overlay virtual network instance to the server side. The two different devices may be two different CPEs. Each CPE is separately deployed at a different SD-WAN site. Alternatively, one of the two devices is CPE, and the other is a server. The inner-loop tunnel is a tunnel established between an overlay virtual network instance and an underlay virtual network instance of the same device. In other words, the customer premise equipment establishes the inner-loop tunnel between the overlay virtual network instance and the virtual network instance interworking with the server side. Establishment of the overlay tunnel and/or the inner-loop tunnel is described in the following embodiment.

S203: The customer premise equipment sends a packet to the server side by using the transmission path.

In this embodiment, when establishing the transmission path to the server side, the customer premise equipment may send the packet to the server side by using the transmission path.

The packet may include the IP address of the loopback interface, so that the server can identify the customer premise equipment based on the IP address. When the transmission path includes the overlay tunnel and/or the inner-loop tunnel, the customer premise equipment may send the packet to the server by using the overlay tunnel and/or the inner-loop tunnel. The packet includes the IP address of the loopback interface.

When the customer premise equipment has only the overlay tunnel or the inner-loop tunnel, the customer premise equipment sends the packet to the server by using the overlay tunnel or the inner-loop tunnel, to register with the server by using the IP address in the packet. When the customer premise equipment includes both the overlay tunnel and the inner-loop tunnel, the customer premise equipment may select the overlay tunnel or the inner-loop tunnel according to an actual requirement to send the packet to the server, to implement registration by using the IP address in the packet. Specifically, in some implementations, a priority of the overlay tunnel is higher than that of the inner-loop tunnel. The CPE sends the packet to the server by preferentially using the overlay tunnel.

It can be learned that in the communication method provided in this embodiment of this application, regardless of whether the customer premise equipment uses the overlay tunnel or the inner-loop tunnel to send the packet to the server for registration, the IP address of the loopback interface established in the overlay virtual network instance is used as a source address of the packet. An IP address of a WAN port or the IP address of the loopback interface in the underlay virtual network instance corresponding to a WAN port is no longer used for registration. Therefore, the following problem does not exist: Translation of an IP address is caused due to a WAN link fault. In this way, the customer premise equipment can use the same IP address to register with the server.

The foregoing embodiment describes a process in which the customer premise equipment may establish the overlay tunnel and/or the inner-loop tunnel to send the packet to the server. For ease of understanding, with reference to the accompanying drawings, the following describes implementation of establishing the overlay tunnel and the inner-loop tunnel to send the packet to the server.

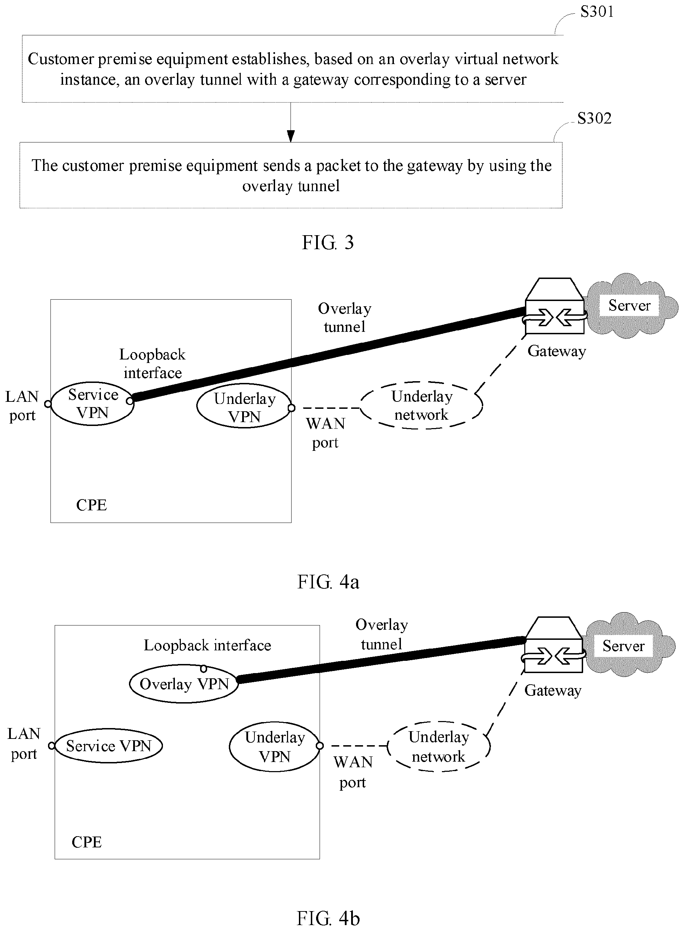

FIG. 3 is a flowchart of implementation of constructing an overlay tunnel according to an embodiment of this application. As shown in FIG. 3, the method may include the following steps:
S301: Customer premise equipment establishes an overlay tunnel from an overlay virtual network instance to a gateway corresponding to a server.

In this embodiment, when the server has the corresponding gateway, the client establishes the overlay tunnel based on the overlay virtual network instance of the customer premise equipment and an overlay virtual network instance on the gateway.

The overlay virtual network instance of the customer premise equipment may be a service virtual network instance currently existing on the customer premise equipment. The service virtual network instance is an overlay virtual network instance. As shown in FIG. 4a, the customer premise equipment creates a loopback interface in a service overlay virtual network instance associated with a LAN interface, and configures an IP address for the loopback interface. The overlay tunnel is established with the gateway based on the service overlay virtual network instance. Certainly, the overlay virtual network instance of the customer premise equipment may alternatively be a newly created overlay virtual network instance, and is independent of the service overlay virtual network instance. As shown in FIG. 4b, the customer premise equipment newly creates an overlay virtual network instance, creates a loopback interface in the overlay virtual network instance, configures an IP address for the loopback interface, and establishes an overlay tunnel with a gateway based on the overlay virtual network instance.

S302: The customer premise equipment sends the packet to the gateway by using the overlay tunnel.

After the customer premise equipment establishes the overlay tunnel with the gateway, the customer premise equipment may send the packet to the gateway by using the overlay tunnel. The packet includes the IP address of the loopback interface, to register with the server by using the IP address. After receiving the packet, the gateway parses the packet to obtain the IP address in the packet, and sends the IP address to the server, so that the server can uniquely identify the customer premise equipment based on the IP address.

In a specific implementation, when establishing the overlay tunnel, the customer premise equipment may further determine, based on an underlay network type corresponding to a WAN port, whether to encrypt a packet passing through the overlay tunnel, to prevent a third party from randomly intercepting the packet. The underlay network type corresponding to the WAN port may be a type such as multiprotocol label switching (multi-protocol Label Switching, MPLS) or Internet. When the underlay network type corresponding to the WAN port is a preset network type, and the client sends the packet to the gateway by using the overlay tunnel, the customer premise equipment encrypts the packet to obtain the encrypted packet, and sends the encrypted packet to the gateway. An encryption key used when the customer premise equipment encrypts the packet may be negotiated with the gateway in advance. In this way, when receiving the encrypted packet, the gateway can decrypt the packet by using the negotiated key, to obtain a plaintext. Then, the gateway device parses the decrypted packet to obtain the IP address, and sends the IP address to the server. For example, when the underlay network type is an Internet network, after generating the packet, the customer premise equipment encrypts the packet, and sends the encrypted packet to the gateway.

In a specific implementation, when the customer premise equipment end sends the packet to the gateway by using the overlay tunnel, the packet may further include the IP address corresponding to the WAN port. Specifically, when sending the packet by using the overlay tunnel, the customer premise equipment encapsulates the packet by using an encapsulation protocol, uses the IP address of the loopback interface as an inner address, and uses the IP address of the WAN port as an outer address. When receiving the packet, the gateway performs decapsulation to obtain the inner IP address, and sends the inner IP address to the server, so that the server identifies the customer premise equipment based on the inner IP address.

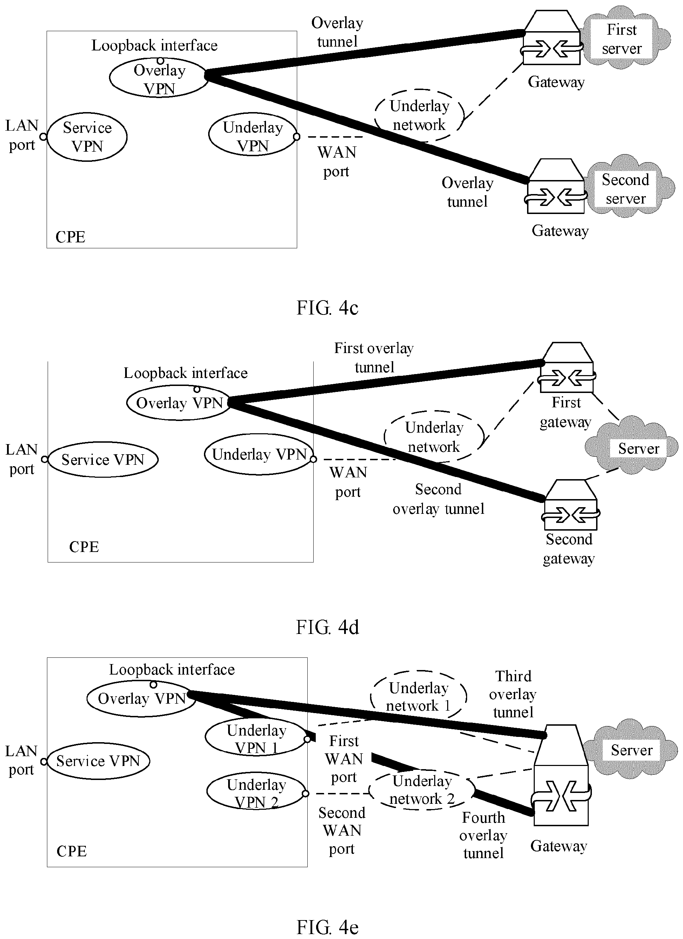

In a specific implementation, when the server side has at least two servers and each server corresponds to a different gateway, as shown in FIG. 4c, the customer premise equipment may establish an overlay tunnel based on the gateway corresponding to each server, to obtain a plurality of overlay tunnels. In this way, when one overlay tunnel is faulty, another overlay tunnel may be used for packet transmission. Specifically, the customer premise equipment separately establishes, based on the overlay virtual network instance, the overlay tunnel with the gateway corresponding to each server. The customer premise equipment sends a packet to the corresponding gateway by using at least one of the established overlay tunnels. For ease of understanding, the following uses an example in which there are two servers for description. Details are as follows:
(1) The customer premise equipment establishes, based on the overlay virtual network instance, an overlay tunnel with a gateway corresponding to a first server.
(2) The customer premise equipment establishes, based on the overlay virtual network instance, an overlay tunnel with a gateway corresponding to a first server.
(3) The customer premise equipment sends, by using the overlay tunnel with the gateway corresponding to the first server, a packet to the gateway corresponding to the first server; or sends, by using the overlay tunnel with the gateway corresponding to the second server, a packet to the gateway corresponding to the second server.

In this embodiment, when the server side has a plurality of servers, the customer premise equipment may establish an overlay tunnel based on a gateway corresponding to each server, and send, by using one or more overlay tunnels, a packet to the gateway corresponding to the overlay tunnel. It should be noted that, a case in which the server side has a plurality of servers in this embodiment of the present invention indicates a case in which the server side has a plurality of servers that can implement this embodiment of the present invention.

In a specific implementation, when the server side has a plurality of servers, an active server and a standby server may be configured. The customer premise equipment may send, by using an overlay tunnel established to a gateway corresponding to the active server, a packet to the gateway corresponding to the active server. When the active server and/or the gateway corresponding to the active server are/is faulty, the customer premise equipment may send, by using an overlay tunnel established to a gateway corresponding to the standby server, a packet to the gateway corresponding to the standby server.

In a specific implementation, when one server corresponds to at least two gateways, the customer premise equipment may establish an overlay tunnel for each gateway, to obtain a plurality of overlay tunnels. In this way, when one overlay tunnel is faulty, another overlay tunnel may be used for packet transmission. Specifically, the customer premise equipment separately establishes, based on the overlay virtual network instance, an overlay tunnel with each gateway corresponding to the server. The customer premise equipment sends a packet to the corresponding gateway by using at least one of the established overlay tunnels. As shown in FIG. 4d, the server corresponds to a first gateway and a second gateway. The following content is specifically included:
(1) The customer premise equipment establishes a first overlay tunnel with the first gateway based on the overlay virtual network instance.
(2) The customer premise equipment establishes a second overlay tunnel with the second gateway based on the overlay virtual network instance.
(3) The customer premise equipment sends a packet to the first gateway by using the first overlay tunnel, and/or sends a packet to the second gateway by using the second overlay tunnel.

In this embodiment, when one server corresponds to a plurality of gateways, the customer premise equipment may establish an overlay tunnel based on each gateway, and send, by using one or more overlay tunnels, a packet to a gateway corresponding to the overlay tunnel.

In some implementations, when one server corresponds to a plurality of gateways, an active gateway and a standby gateway may be preconfigured. The customer premise equipment sends a packet to the active gateway by using an overlay tunnel established to the active gateway. When the active gateway is faulty, the customer premise equipment may send a packet to the standby gateway by using an overlay tunnel established to the standby gateway.

The foregoing embodiment describes a case in which when the server side has a plurality of servers or a plurality of gateways, a plurality of overlay tunnels may be established, to add a fault tolerance mechanism. In addition, when the customer premise equipment has a plurality of WAN ports, different overlay tunnels may be established based on different WAN ports. Specifically, the customer premise equipment separately establishes, based on the overlay virtual network instance by using each WAN port, an overlay tunnel with a gateway corresponding to the server. The customer premise equipment sends a packet to the gateway by using at least one of the established overlay tunnels. As shown in FIG. 4e, the customer premise equipment has two WAN ports. The customer premise equipment establishes different tunnels based on the overlay virtual network instance and different WAN ports. Details are as follows:
(1) The customer premise equipment establishes, based on the overlay virtual network instance by using a first WAN port, a third overlay tunnel with the gateway corresponding to the server.
(2) The customer premise equipment establishes, based on the overlay virtual network instance by using a second WAN port, a fourth overlay tunnel with the gateway corresponding to the server.
(3) The customer premise equipment sends a packet to the gateway by using the third overlay tunnel and/or the fourth overlay tunnel.

In this embodiment, when the customer premise equipment has a plurality of WAN ports, the customer premise equipment establishes a plurality of overlay tunnels by using different WAN ports, and sends, by using one or more overlay tunnels, a packet to a gateway corresponding to the overlay tunnel. Different WAN ports may correspond to the same underlay network, or may correspond to different underlay networks. As shown in FIG. 4e, the first WAN port corresponds to an underlay network 1, and the second WAN port corresponds to an underlay network 2.

In a specific implementation, when the customer premise equipment has a plurality of WAN ports, an active WAN port and a standby WAN port may be preconfigured. The customer premise equipment sends a packet to the gateway by preferentially using the overlay tunnel established between the active WAN port and the gateway. When a link of the active WAN port is faulty, the customer premise equipment may send a packet to the gateway by using an overlay tunnel established between the standby WAN port and the gateway, thereby improving packet transmission efficiency and increasing a fault tolerance capability of the customer premise equipment. A link fault of the WAN port may include a link fault caused due to a fault of a WAN port, or may be a link fault between a WAN port of the customer premise equipment and a WAN port of the gateway.

The foregoing embodiment describes specific implementation in which the customer premise equipment establishes the overlay tunnel with the gateway of the server and sends the packet by using the overlay tunnel. With reference to the accompanying drawings, the following describes implementation in which the customer premise equipment establishes an inner-loop tunnel and sends a packet by using the inner-loop tunnel.

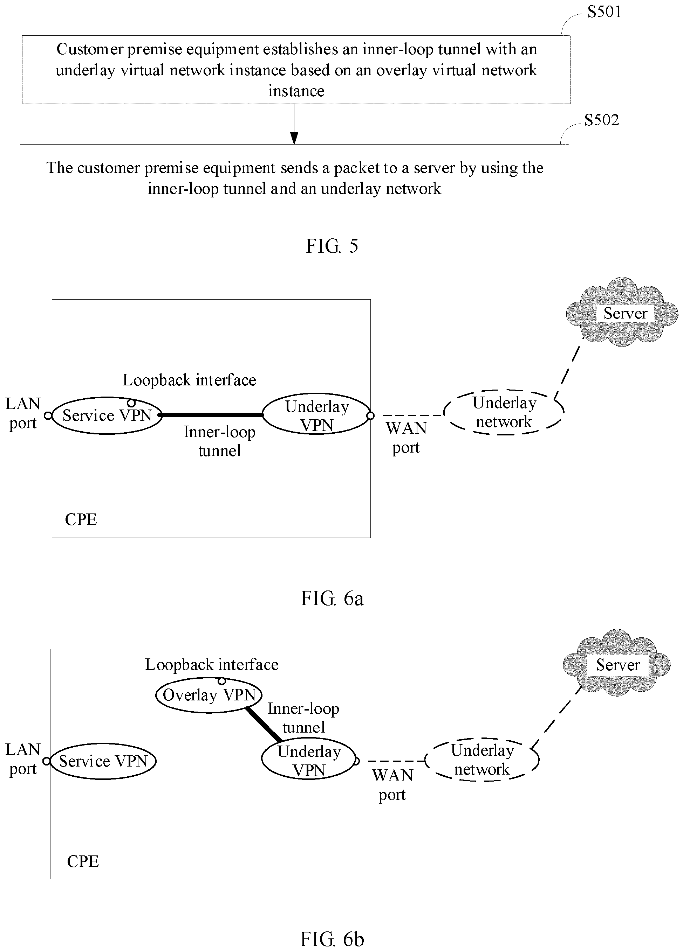

FIG. 5 is a flowchart of implementation of establishing an inner-loop tunnel according to an embodiment of this application. As shown in FIG. 5, the method may include the following steps:
S501: Customer premise equipment establishes an inner-loop tunnel with an underlay virtual network instance based on an overlay virtual network instance.

In this embodiment, when the customer premise equipment has the overlay virtual network instance and the underlay virtual network instance, the customer premise equipment establishes the inner-loop tunnel between the two virtual network instances. The underlay virtual network instance is associated with a WAN port of the customer premise equipment. The WAN port interworks with a server by using an underlay network.

The overlay virtual network instance corresponding to the customer premise equipment may be a service virtual network instance currently existing on the customer premise equipment. The service virtual network instance is an overlay virtual network instance. As shown in FIG. 6a, the customer premise equipment creates a loopback interface in a service overlay virtual network instance associated with a LAN interface, and configures an IP address for the loopback interface. The customer premise equipment establishes, based on the service overlay virtual network instance, the inner-loop tunnel with the underlay virtual network instance associated with the WAN port. Certainly, the overlay virtual network instance corresponding to the customer premise equipment may alternatively be a newly created overlay virtual network instance, and is independent of the service overlay virtual network instance. As shown in FIG. 6b, the CPE newly creates an overlay virtual network instance, creates a loopback interface in the overlay virtual network instance, configures an IP address for the loopback interface, and establishes, based on the overlay virtual network instance, an inner-loop tunnel with an underlay virtual network instance corresponding to a WAN port.

S502: The customer premise equipment sends a packet to a server by using the inner-loop tunnel and an underlay network.

In this embodiment, after establishing the inner-loop tunnel, the customer premise equipment may send the packet to the server by using the inner-loop tunnel and the underlay network corresponding to the WAN port.

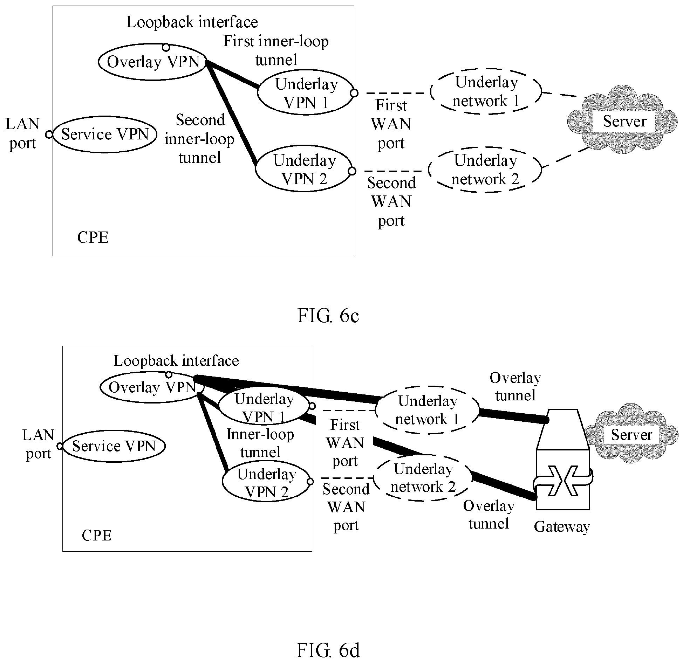

In a specific implementation, when the customer premise equipment has a plurality of WAN ports, if the plurality of WAN ports correspond to the same underlay virtual network instance, the customer premise equipment establishes the inner-loop tunnel based on the overlay virtual network instance and the underlay virtual network instance. If the plurality of WAN ports are associated with different underlay virtual network instances, the customer premise equipment may establish, based on an overlay virtual network, an inner-loop tunnel with an underlay virtual network associated with each WAN port, to obtain a plurality of inner-loop tunnels, thereby implementing a fault tolerance mechanism. Specifically, the customer premise equipment separately establishes, based on the overlay virtual network instance, the inner-loop tunnel with the underlay virtual network instance corresponding to each WAN port. The customer premise equipment sends a packet to the server by using at least one of the established inner-loop tunnels and an underlay network corresponding to the inner-loop tunnel. As shown in FIG. 6c, when the customer premise equipment includes a first WAN port and a second WAN port, the first WAN port corresponds to an underlay virtual network instance virtual network instance 1, and the second WAN port corresponds to an underlay virtual network instance 2.

When the customer premise equipment has a plurality of WAN ports and the plurality of WAN ports are associated with different underlay virtual network instances, specific implementation of establishing the inner-loop tunnel and sending the packet by using the inner-loop tunnel is as follows:
(1) The customer premise equipment establishes, based on the overlay virtual network instance, a first inner-loop tunnel with the underlay virtual network instance corresponding to the first WAN port.
   For example, the customer premise equipment establishes the first inner-loop tunnel with the underlay virtual network instance 1 based on the overlay virtual network instance.
(2) The customer premise equipment establishes, based on the overlay virtual network instance, a second inner-loop tunnel with the underlay virtual network instance corresponding to the second WAN port.
   For example, the customer premise equipment establishes the second inner-loop tunnel with the underlay virtual network instance 2 based on the overlay virtual network instance.
(3) The customer premise equipment sends the packet to the server by using the first inner-loop tunnel and the underlay network corresponding to the first WAN port, and/or sends the packet to the server by using the second inner-loop tunnel and the underlay network corresponding to the second WAN port.

In this embodiment, when separately establishing inner-loop tunnels with different WAN ports, the customer premise equipment may send the packet to the server by using an inner-loop tunnel corresponding to each WAN port and an underlay network corresponding to the WAN port. Each WAN port may correspond to the same underlay network, or may correspond to different underlay networks. For example, in FIG. 6c, the first WAN port corresponds to an underlay network 1, and the second WAN port corresponds to an underlay network 2.

In a specific implementation, when the customer premise equipment has a plurality of WAN ports, an active WAN port and a standby WAN port may be configured. In this case, when a link of the active WAN port is faulty, packet transmission may be performed by using a link of the standby WAN port, to ensure packet transmission quality. The inner-loop tunnel established with the underlay virtual network instance corresponding to the active WAN port is an active inner-loop tunnel, and the inner-loop tunnel established with the underlay virtual network instance corresponding to the standby WAN port is a standby inner-loop tunnel. The customer premise equipment may send the packet to the server by preferentially using the active inner-loop tunnel and the underlay network corresponding to the active WAN port. When a link of the active WAN port is faulty, the customer premise equipment may send the packet to the server by using the standby inner-loop tunnel and the underlay network corresponding to the standby WAN port. A link fault of the WAN port may include a link fault caused due to a fault of a WAN port, or may be a link fault between a WAN port of the customer premise equipment and a WAN port of the gateway.

In a specific implementation, when NAT exists in a network corresponding to the WAN port, for example, an Internet network, to prevent the IP address of the loopback interface from being translated into a public network IP address in address translation, the IP address of the loopback interface may be directly configured as a public network IP address, thereby avoiding translation of the IP address of the loopback interface due to NAT mapping, so that the customer premise equipment can register with the server by using the IP address of the loopback interface.

The foregoing embodiments separately describe specific implementation in which the customer premise equipment establishes the overlay tunnel and the inner-loop tunnel based on the overlay virtual network instance, and sends the packet to the server by using the overlay tunnel and the inner-loop tunnel. In some implementations, when the customer premise equipment establishes both the overlay tunnel and the inner-loop tunnel, a use priority of the overlay tunnel may be set to be higher than that of the inner-loop tunnel. In other words, the overlay tunnel may be used as an active path, and the inner-loop tunnel may be used as a standby path. As shown in FIG. 6d, the customer premise equipment CPE establishes, based on the overlay virtual network instance, an overlay tunnel with a gateway by using a WAN port. In addition, the CPE establishes an inner-loop tunnel based on the overlay virtual network instance and an underlay virtual network instance corresponding to the WAN port.

In a specific implementation, when the gateway on the server side is faulty, the overlay tunnel cannot be used to send the packet to the gateway. In this case, the customer premise equipment may switch from the overlay tunnel to the inner-loop tunnel, and send the packet to the server by using the inner-loop tunnel and the underlay network, so that the server can identify the customer premise equipment based on the IP address in the packet.

Based on the foregoing method embodiments, an embodiment of this application further provides a communications apparatus. The following provides description with reference to the accompanying drawings.

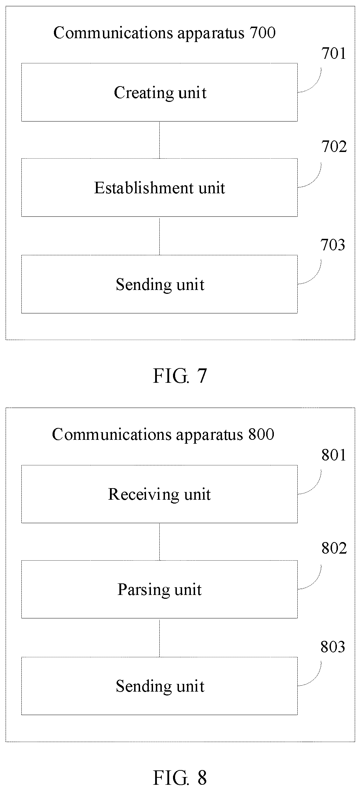

FIG. 7 is a diagram of a structure of a communications apparatus according to an embodiment of this application. The apparatus 700 can be applied to customer premise equipment to implement the functions of the customer premise equipment in the embodiments shown in FIG. 2 to FIG. 6, and may include a creating unit 701, an establishment unit 702, and a sending unit 703.

The creating unit 701 is configured to: create a loopback interface in an overlay virtual network instance, and configure an IP address for the loopback interface. For a specific implementation of the creating unit 701, refer to the detailed description of step S201 in the embodiment shown in FIG. 2.

The establishment unit 702 is configured to establish a transmission path to a server side based on the overlay virtual network instance. For specific implementation of the establishment unit 702, refer to the detailed description of step S202 in the embodiment shown in FIG. 2, the detailed description of step S301 in the embodiment shown in FIG. 3, or the detailed description of step S501 in the embodiment shown in FIG. 5.

The sending unit 703 is configured to send a packet to the server side by using the transmission path. The packet includes at least the IP address. For specific implementation of the sending unit 703, refer to the detailed description of step S203 in the embodiment shown in FIG. 2, the detailed description of step S302 in the embodiment shown in FIG. 3, or the detailed description of step S502 in the embodiment shown in FIG. 5.

In a specific implementation, the establishment unit is specifically configured to: establish an overlay tunnel from the overlay virtual network instance to the server side; and/or establish an inner-loop tunnel between the overlay virtual network instance and a virtual network instance interworking with the server side. For specific implementation of establishing the overlay tunnel, refer to the detailed description of step S301 in the embodiment shown in FIG. 3. For specific implementation of establishing the inner-loop tunnel, refer to the detailed description of step S501 in the embodiment shown in FIG. 5.

In a specific implementation, when the server side has a corresponding gateway, the establishment unit is specifically configured to establish an overlay tunnel from the overlay virtual network instance to the gateway corresponding to the server side.

The sending unit is specifically configured to send a packet to the gateway by using the overlay tunnel.

For specific implementation of the establishment unit 702 and the sending unit 703, refer to the detailed descriptions of step S301 and step S302 in the embodiment shown in FIG. 3.

In a specific implementation, when the server side has at least two servers and each server corresponds to a different gateway, the establishment unit is specifically configured to separately establish, based on the overlay virtual network instance, an overlay tunnel with the gateway corresponding to each server.

The sending unit is specifically configured to send the packet to the corresponding gateway by using at least one of the overlay tunnels.

When the server side has a plurality of servers, for specific implementation of the establishment unit 702 and the sending unit 703, refer to the detailed description of step S302 in the embodiment shown in FIG. 3.

In a specific implementation, when the at least two servers include an active server and a standby server, the sending unit is specifically configured to: send, by using an overlay tunnel established to a gateway corresponding to the active server, a packet to the gateway corresponding to the active server, and when the active server and/or the gateway corresponding to the active server are/is faulty, send, by the customer premise equipment by using an overlay tunnel established to a gateway corresponding to the standby server, a packet to the gateway corresponding to the standby server.

For specific implementation of using the active server and the standby server for the sending unit 703, refer to the detailed description of step S302 in the embodiment shown in FIG. 3.

In a specific implementation, when one server corresponds to at least two gateways, the establishment unit is specifically configured to separately establish, based on the overlay virtual network instance, an overlay tunnel with each gateway corresponding to the server.

The sending unit is specifically configured to send the packet to the corresponding gateway by using at least one of the overlay tunnels.

When one server corresponds to a plurality of gateways, for specific implementation of the establishment unit 702, refer to the detailed description of step S302 in the embodiment shown in FIG. 3.

In a specific implementation, the at least two gateways include an active gateway and a standby gateway, and the sending unit is specifically configured to: send a packet to the active gateway by using an overlay tunnel established to the active gateway, and when the active gateway is faulty, send a packet to the standby gateway by using an overlay tunnel established to the standby gateway.

When the server corresponds to the active gateway and the standby gateway, for specific implementation of using the active gateway and the standby gateway for the sending unit 703, refer to the detailed description of step S302 in the embodiment shown in FIG. 3.

In a specific implementation, when the apparatus has at least two WAN ports, each WAN port has a corresponding underlay virtual network instance, and the establishment unit is specifically configured to separately establish, based on the overlay virtual network instance by using each WAN port, an overlay tunnel with the gateway corresponding to the server.

The sending unit is specifically configured to send the packet to the gateway by using at least one of the overlay tunnels.

When the customer premise equipment to which the apparatus 700 is applied has a plurality of WAN ports, for specific implementation of the establishment unit 702 and the sending unit 703, refer to the detailed description of step S302 in FIG. 3.

In a specific implementation, when the two WAN ports include an active WAN port and a standby WAN port, the sending unit is specifically configured to: send a packet to the gateway by using an overlay tunnel established between the active WAN port and the gateway, and when the active WAN port is faulty, send a packet to the gateway by using an overlay tunnel established between the standby WAN port and the gateway.

For specific implementation of using the active WAN port and the standby WAN port for the sending unit 703, refer to the detailed description of step S302 in the embodiment shown in FIG. 3.

In a specific implementation, when an underlay network type corresponding to the WAN port of the customer premise equipment is a preset network type, the apparatus further includes:
an encryption unit, configured to: before the packet is sent to the gateway by using the overlay tunnel, encrypt the packet to obtain the encrypted packet.

For specific implementation of the encryption unit, refer to the detailed description of step S302 in the embodiment shown in FIG. 3.

In a specific implementation, the establishment unit is specifically configured to establish the inner-loop tunnel with an underlay virtual network instance based on the overlay virtual network instance. The underlay virtual network instance is associated with the WAN port of the customer premise equipment. The WAN port interworks with the server by using an underlay network.

The sending unit is specifically configured to send the packet to the server by using the inner-loop tunnel and the underlay network.

For specific implementation of the establishment unit 702, refer to the detailed description of step S501 in the embodiment shown in FIG. 5.

In a specific implementation, when the customer premise equipment has at least two WAN ports and different WAN ports are bound to different underlay virtual network instances, the establishment unit is specifically configured to separately establish, based on the overlay virtual network instance, an inner-loop tunnel with an underlay virtual network instance corresponding to each WAN port.

The sending unit is specifically configured to send the packet to the server by using at least one of the inner-loop tunnels and an underlay network corresponding to the inner-loop tunnel.

When the customer premise equipment has a plurality of WAN ports, for specific implementation of the establishment unit 702 and the sending unit 703, refer to the detailed description of step S502 in the embodiment shown in FIG. 5.

In a specific implementation, the at least two WAN ports include the active WAN port and the standby WAN port. An inner-loop tunnel established with an underlay virtual network instance corresponding to the active WAN port is an active inner-loop tunnel. An inner-loop tunnel established with an underlay virtual network instance corresponding to the standby WAN port is a standby inner-loop tunnel. The sending unit is specifically configured to: send the packet to the server by using the active inner-loop tunnel and an underlay network corresponding to the active WAN port, and when the active WAN port is faulty, send the packet to the server by using the standby inner-loop tunnel and an underlay network corresponding to the standby WAN port.

For specific implementation of using the active WAN port and the standby WAN port for the sending unit 703, refer to the detailed description of step S502 in the embodiment shown in FIG. 5.

In a specific implementation, when an overlay tunnel and an inner-loop tunnel exist, a priority of the overlay tunnel is higher than that of the inner-loop tunnel.

In a specific implementation, when the gateway corresponding to the server side is faulty, the apparatus further includes:
a switching unit, configured to switch from the overlay tunnel to the inner-loop tunnel.

For specific implementation of the switching unit, refer to the detailed description of step S502 in the embodiment shown in FIG. 5.

In a specific implementation, the overlay virtual network instance is a service virtual network instance in the communications apparatus. The service virtual network instance is an overlay virtual network instance. Alternatively, the overlay virtual network instance is an overlay virtual network instance newly established by the communications apparatus.

In a specific implementation, the packet further includes an IP address corresponding to the WAN port.

In a specific implementation, when network address translation exists in a network connected to the WAN port corresponding to the communications apparatus, the IP address configured for the loopback interface is a public network IP address.

For specific executable functions and implementations of the communications apparatus 700, refer to corresponding descriptions of the customer premise equipment in the embodiments shown in FIG. 2 to FIG. 6. Details are not described herein again.

FIG. 8 shows another communications apparatus according to an embodiment of this application. The apparatus 800 can be applied to a gateway to implement functions of the gateway in the embodiments shown in FIG. 2 to FIG. 6. The apparatus includes a receiving unit 801, a parsing unit 802, and a sending unit 803.

The receiving unit 801 is configured to receive a packet sent by customer premise equipment. The packet includes an IP address of a loopback interface in the customer premise equipment. The loopback interface is located in an overlay virtual network instance in the customer premise equipment. For specific implementation of the receiving unit 801, refer to the detailed description of step S203 in the embodiment shown in FIG. 2 or the detailed description of step S302 in the embodiment shown in FIG. 3.

The parsing unit 802 is configured to parse the packet to obtain the IP address. For specific implementation of the parsing unit 802, refer to the detailed description of step S302 in the embodiment shown in FIG. 3.

The sending unit 803 is configured to send the IP address to a server, so that the server identifies the customer premise equipment based on the IP address. For specific implementation of the sending unit 803, refer to the detailed description of step S302 in the embodiment shown in FIG. 3.

In a specific implementation, when the packet is an encrypted packet, the apparatus further includes:
a decryption unit, configured to decrypt the packet before the packet is parsed.

For specific implementation of the decryption unit, refer to the detailed description of step S302 in the embodiment shown in FIG. 3.

For specific executable functions and implementations of the communications apparatus 800, refer to corresponding descriptions of the customer premise equipment in the embodiments shown in FIG. 2 to FIG. 6. Details are not described herein again.

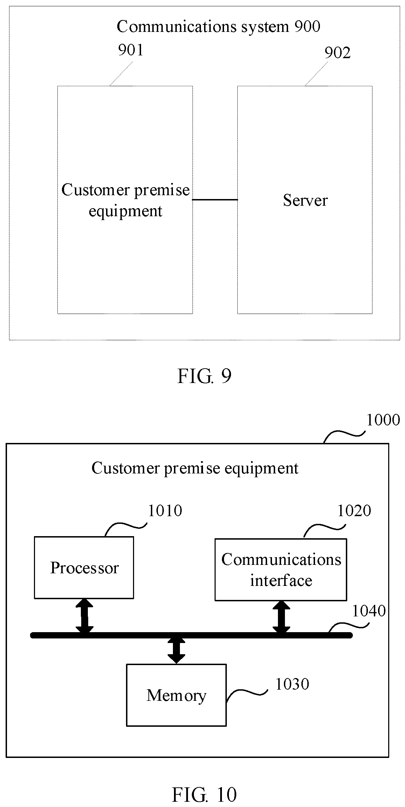

FIG. 9 is a diagram of a structure of a communications system according to an embodiment of this application. As shown in FIG. 9, the system may include customer premise equipment 901 and a server 902.

The customer premise equipment 901 is configured to: create a loopback interface in an overlay virtual network instance, and configure an IP address for the loopback interface; establish a transmission path to a server side based on the overlay virtual network instance; and send a packet to a server by using the transmission path, where the packet includes at least the IP address.

For specific implementation of the customer premise equipment 901, refer to the detailed descriptions of step S201 to step S203 in the embodiment shown in FIG. 2, the detailed descriptions of step S301 and step S302 in the embodiment shown in FIG. 3, or the detailed descriptions of step S501 and step S502 in the embodiment shown in FIG. 5.

The server 902 is configured to identify the customer premise equipment based on the IP address in the packet.

For specific implementation of the server 902, refer to the detailed description of step S203 in the embodiment shown in FIG. 2, the detailed description of step S302 in the embodiment shown in FIG. 3, or the detailed description of step S502 in the embodiment shown in FIG. 5.

In a possible implementation, the customer premise equipment is specifically configured to: establish an overlay tunnel from the overlay virtual network instance to the server side; and/or establish an inner-loop tunnel between the overlay virtual network instance and a virtual network instance interworking with the server side. For specific implementation of the customer premise equipment 901, refer to the detailed descriptions of step S301 and step S302 in the embodiment shown in FIG. 3 or the detailed descriptions of step S501 and step S502 in the embodiment shown in FIG. 5.

In a possible implementation, the system further includes a gateway. The gateway communicates with the server. The customer premise equipment is specifically configured to: establish an overlay tunnel from the overlay virtual network instance to the gateway corresponding to the server; and send the packet to the gateway by using the overlay tunnel.

The gateway is configured to: parse the packet to obtain the IP address, and send the IP address to the server.

For specific implementation of the gateway, refer to the detailed description of step S302 in the embodiment shown in FIG. 3.

In a possible implementation, the system includes an active gateway and a standby gateway. The active gateway and the standby gateway both communicate with the server. The customer premise equipment is specifically configured to: send a packet to the active gateway by using an overlay tunnel established to the active gateway, and when the active gateway is faulty, send a packet to the standby gateway by using an overlay tunnel established to the standby gateway.

When the system includes the active gateway and the standby gateway, for specific implementation of the customer premise equipment, refer to the detailed description of step S302 in the embodiment shown in FIG. 3.

In a possible implementation, the customer premise equipment is specifically configured to: establish the inner-loop tunnel with an underlay virtual network instance based on the overlay virtual network instance, where the underlay virtual network instance is associated with a WAN port of the customer premise equipment, and the WAN port interworks with the server by using an underlay network; and send the packet to the server by using the inner-loop tunnel and the underlay network.

For specific implementation in which the customer premise equipment establishes the inner-loop tunnel, refer to the detailed descriptions of step S501 and step S502 in the embodiment shown in FIG. 5.

In a possible implementation, when a gateway corresponding to the server side is faulty, the customer premise equipment is further configured to switch from the overlay tunnel to the inner-loop tunnel.

For specific implementation of the switching performed by the customer premise equipment, refer to the detailed description of step S502 in the embodiment shown in FIG. 5.

It should be noted that, for specific implementation of the customer premise equipment 901 in this embodiment, reference may be made to the embodiments shown in FIG. 2 to FIG. 6, and for specific implementation of the server 902, reference may be made to the embodiments shown in FIG. 2 to FIG. 6. Details are not described herein again in this embodiment.

FIG. 10 is a schematic diagram of a structure of a communications device according to an embodiment of this application. The communications device may be, for example, the customer premise equipment or the gateway device in the embodiments shown in FIG. 2 to FIG. 6, or may be a device implementation of the communications apparatus in the embodiment shown in FIG. 7 or FIG. 8.

With reference to FIG. 10, a network device 1000 includes a processor 1010, a communications interface 1020, and a memory 1030. There may be one or more processors 1010 in a packet forwarding device 1000. One processor is used as an example in FIG. 10. In this embodiment of this application, the processor 1010, the communications interface 1020, and the memory 1030 may be connected by using a bus system or in another manner. In FIG. 10, an example in which the processor 1010, the communications interface 1020, and the memory 1030 are connected by using a bus system 1040 is used.

The processor 1010 may be a CPU, an NP, or a combination of a CPU and an NP. The processor 1010 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communications interface 1020 is configured to receive and send a packet. Specifically, the communications interface 1020 may include a receiving interface and a sending interface. The receiving interface may be configured to receive a packet, and the sending interface may be configured to send a packet. There may be one or more communications interfaces 1020.

The memory 1030 may include a volatile memory (English: volatile memory), for example, a random-access memory (random-access memory, RAM). The memory 1030 may further include a non-volatile memory (English: non-volatile memory), for example, a flash memory (English: flash memory), a hard disk drive (hard disk drive, HDD), or a solid-state drive (solid-state drive, SSD). The memory 1030 may further include a combination of the foregoing types of memories.

Optionally, the memory 1030 stores an operating system, a program, an executable module or a data structure, a subset thereof, or an extended set thereof, where the program may include various operation instructions, to implement various operations. The operating system may include various system programs, to implement various basic services and process a hardware-based task. The processor 1010 may read a program in the memory 1030, to implement the communication transmission method provided in the embodiments of this application.

The memory 1030 may be a storage device in the communications device 1000, or may be a storage apparatus independent of the communications device 1000.

The bus system 1040 may be a peripheral component interconnect (peripheral component interconnect, PCI) bus, an extended industry standard architecture (extended industry standard architecture, EISA) bus, or the like. The bus system 1040 may be classified into an address bus, a data bus, a control bus, and the like. For ease of representation, only one thick line is for representing the bus in FIG. 10, but this does not mean that there is only one bus or only one type of bus.

In addition, an embodiment of this application further provides a gateway. The gateway includes a processor and a memory. The memory is configured to store instructions. The processor is configured to execute the instructions in the memory, to perform an operation corresponding to the gateway in the embodiments of this application.

An embodiment of this application further provides a computer-readable storage medium, including instructions. When the instructions are run on a computer, the computer is enabled to perform the foregoing communication method.

In this specification, the claims, and the accompanying drawings of this application, terms "first", "second", "third", "fourth", and the like (if existent) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

It may be clearly understood by a person skilled in the art that, for the purpose of convenient and brief description, for a detailed working process of the foregoing system, apparatus, and unit, reference may be made to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into units is merely logical service division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in the embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that, in the foregoing one or more examples, services described in the present invention may be implemented by hardware, software, firmware, or any combination thereof. When the present invention is implemented by the software, the services may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a general-purpose or a special-purpose computer.

The objectives, technical solutions, and beneficial effects of the present invention have been further described in detail in the foregoing specific implementations. It should be understood that the foregoing descriptions are merely specific implementations of the present invention.

The foregoing embodiments are merely intended for describing the technical solutions of this application instead of limiting this application. Although this application is described in detail with reference to the foregoing embodiments, it should understand that a person of ordinary skill in the art may still make modifications to the technical solutions recorded in the foregoing embodiments or make equivalent replacements to a part of technical features thereof. These modifications or replacements do not make the essence of the corresponding technical solutions depart from the scope of the technical solutions in embodiments of this application.

## Claims

1. A communication method, wherein the method comprises:
creating, by customer premise equipment, a loopback loopback interface in an overlay overlay virtual network instance, and configuring an IP address for the loopback interface;
establishing, by the customer premise equipment, a transmission path to a server side based on the overlay virtual network instance; and
sending, by the customer premise equipment, a packet to the server side by using the transmission path, wherein the packet comprises at least the IP address.

2. The method according to claim 1, wherein the establishing, by the customer premise equipment, a transmission path to a server side based on the overlay virtual network instance comprises:
establishing, by the customer premise equipment, an overlay tunnel from the overlay virtual network instance to the server side; and/or
establishing, by the customer premise equipment, an inner-loop tunnel between the overlay virtual network instance and a virtual network instance interworking with the server side.

3. The method according to claim 2, wherein when the server side has a gateway corresponding to the server, the establishing, by the customer premise equipment, an overlay tunnel from the overlay virtual network instance to the server side comprises:
establishing, by the customer premise equipment, an overlay tunnel from the overlay virtual network instance to the gateway corresponding to the server; and
the sending, by the customer premise equipment, a packet to the server side by using the transmission path comprises:
sending, by the customer premise equipment, a packet to the gateway by using the overlay tunnel.

4. The method according to claim 3, wherein when the server side has at least two servers and each server corresponds to a different gateway, the establishing, by the customer premise equipment, an overlay tunnel from the overlay virtual network instance to the gateway corresponding to the server comprises:
separately establishing, by the customer premise equipment based on the overlay virtual network instance, an overlay tunnel with the gateway corresponding to each server; and
the sending, by the customer premise equipment, a packet to the gateway by using the overlay tunnel comprises:
sending, by the customer premise equipment, the packet to the corresponding gateway by using at least one of the overlay tunnels.

5. The method according to claim 4, wherein the at least two servers comprise an active server and a standby server, and the sending, by the customer premise equipment, the packet to the corresponding gateway by using at least one of the overlay tunnels comprises:
sending, by the customer premise equipment by using an overlay tunnel established to a gateway corresponding to the active server, a packet to the gateway corresponding to the active server, and when the active server and/or the gateway corresponding to the active server are/is faulty, sending, by the customer premise equipment by using an overlay tunnel established to a gateway corresponding to the standby server, a packet to the gateway corresponding to the standby server.

6. The method according to any one of claims 3 to 5, wherein when one server corresponds to at least two gateways, the establishing, by the customer premise equipment, an overlay tunnel from the overlay virtual network instance to the gateway corresponding to the server comprises:
separately establishing, by the customer premise equipment based on the overlay virtual network instance, an overlay tunnel with each gateway corresponding to the server; and
the sending, by the customer premise equipment, a packet to the server by using the overlay tunnel comprises:
sending, by the customer premise equipment, the packet to the corresponding gateway by using at least one of the overlay tunnels.

7. The method according to claim 6, wherein the at least two gateways comprise an active gateway and a standby gateway, and the sending, by the customer premise equipment, the packet to the corresponding gateway by using at least one of the overlay tunnels comprises:
sending, by the customer premise equipment, a packet to the active gateway by using an overlay tunnel established to the active gateway, and when the active gateway is faulty, sending, by the customer premise equipment, a packet to the standby gateway by using an overlay tunnel established to the standby gateway.

8. The method according to any one of claims 3 to 7, wherein when the customer premise equipment has at least two WAN ports, each WAN port has a corresponding underlay virtual network instance, and the establishing, by the customer premise equipment, an overlay tunnel from the overlay virtual network instance to a gateway corresponding to the server comprises:
separately establishing, by the customer premise equipment based on the overlay virtual network instance by using each WAN port, an overlay tunnel with the gateway corresponding to the server; and
the sending, by the customer premise equipment, a packet to the gateway by using the overlay tunnel comprises:
sending, by the customer premise equipment, the packet to the gateway by using at least one of the overlay tunnels.

9. The method according to claim 8, wherein the at least two WAN ports comprise an active WAN port and a standby WAN port, and the sending, by the customer premise equipment, a packet to the gateway by using the overlay tunnel comprises:
sending, by the customer premise equipment, a packet to the gateway by using an overlay tunnel established between the active WAN port and the gateway, and when a link of the active WAN port is faulty, sending, by the customer premise equipment, a packet to the gateway by using an overlay tunnel established between the standby WAN port and the gateway.

10. The method according to any one of claims 3 to 9, wherein when an underlay underlay network type corresponding to the WAN port of the customer premise equipment is a preset network type, before the sending, by the customer premise equipment, a packet to the gateway by using the overlay tunnel, the method further comprises:
encrypting, by the customer premise equipment, the packet to obtain the encrypted packet.

11. The method according to any one of claims 1 to 10, wherein the establishing, by the customer premise equipment, an inner-loop tunnel between the overlay virtual network instance and a virtual network instance interworking with the server side comprises:
establishing, by the customer premise equipment, the inner-loop tunnel with an underlay virtual network instance based on the overlay virtual network instance, wherein the underlay virtual network instance is associated with the WAN port of the customer premise equipment, and the WAN port interworks with the server by using an underlay network; and
the sending, by the client, a packet to the server side by using the transmission path comprises:
sending, by the customer premise equipment, the packet to the server by using the inner-loop tunnel and the underlay network.

12. The method according to claim 11, wherein when the customer premise equipment has at least two WAN ports and different WAN ports are bound to different underlay virtual network instances, the establishing, by the customer premise equipment, the inner-loop tunnel with an underlay virtual network instance based on the overlay virtual network instance comprises:
separately establishing, by the customer premise equipment based on the overlay virtual network instance, an inner-loop tunnel with an underlay virtual network instance corresponding to each WAN port; and
the sending, by the customer premise equipment, the packet to the server by using the inner-loop tunnel and the underlay network comprises:
sending, by the customer premise equipment, the packet to the server by using at least one of the inner-loop tunnels and an underlay network corresponding to the inner-loop tunnel.

13. The method according to claim 12, wherein the at least two WAN ports comprise the active WAN port and the standby WAN port, an inner-loop tunnel established with an underlay virtual network instance corresponding to the active WAN port is an active inner-loop tunnel, an inner-loop tunnel established with an underlay virtual network instance corresponding to the standby WAN port is a standby inner-loop tunnel, and the sending, by the client, the packet to the server by using at least one of the inner-loop tunnels and an underlay network corresponding to the inner-loop tunnel comprises:
sending, by the customer premise equipment, the packet to the server by using the active inner-loop tunnel and an underlay network corresponding to the active WAN port, and when a link of the active WAN port is faulty, sending, by the customer premise equipment, the packet to the server by using the standby inner-loop tunnel and an underlay network corresponding to the standby WAN port.

14. The method according to any one of claims 1 to 13, wherein when the customer premise equipment has an overlay tunnel and an inner-loop tunnel, a priority of the overlay tunnel is higher than that of the inner-loop tunnel.

15. The method according to claim 14, wherein when the gateway corresponding to the server side is faulty, the method further comprises:
switching, by the customer premise equipment, from the overlay tunnel to the inner-loop tunnel.

16. The method according to any one of claims 1 to 15, wherein the overlay virtual network instance is a service virtual network instance in the customer premise equipment, and the service virtual network instance is an overlay virtual network instance; or the overlay virtual network instance is an overlay virtual network instance newly established by the customer premise equipment.

17. The method according to any one of claims 1 to 16, wherein the packet further comprises an IP address corresponding to the WAN port.

18. The method according to any one of claims 1 to 17, wherein when network address translation exists in a network connected to the WAN port corresponding to the customer premise equipment, the IP address configured for the loopback interface is a public network IP address.

19. A communication method, wherein the method comprises:
receiving, by a gateway, a packet sent by customer premise equipment, wherein the packet comprises an IP address of a loopback interface in the customer premise equipment, and the loopback interface is located in an overlay virtual network instance in the customer premise equipment;
parsing, by the gateway, the packet to obtain the IP address, and sending the IP address to a server, so that the server identifies the customer premise equipment based on the IP address.

20. The method according to claim 19, wherein when the packet is an encrypted packet, before the parsing, by the gateway, the packet, the method further comprises:
decrypting, by the gateway, the packet.

21. A communications apparatus, wherein the apparatus comprises:
a creating unit, configured to: create a loopback interface in an overlay virtual network instance, and configure an IP address for the loopback interface;
an establishment unit, configured to establish a transmission path to a server side based on the overlay virtual network instance; and
a sending unit, configured to send a packet to the server side by using the transmission path, wherein the packet comprises at least the IP address.

22. The apparatus according to claim 21, wherein the establishment unit is specifically configured to: establish an overlay tunnel from the overlay virtual network instance to the server side; and/or establish an inner-loop tunnel between the overlay virtual network instance and a virtual network instance interworking with the server side.

23. The apparatus according to claim 22, wherein when the server side has a corresponding gateway, the establishment unit is specifically configured to establish an overlay tunnel from the overlay virtual network instance to the gateway corresponding to the server side; and
the sending unit is specifically configured to send a packet to the gateway by using the overlay tunnel.

24. The apparatus according to claim 23, wherein when the server side has at least two servers and each server corresponds to a different gateway, the establishment unit is specifically configured to separately establish, based on the overlay virtual network instance, an overlay tunnel with the gateway corresponding to each server; and
the sending unit is specifically configured to send the packet to the corresponding gateway by using at least one of the overlay tunnels.

25. The apparatus according to claim 24, wherein when the at least two servers comprise an active server and a standby server, the sending unit is specifically configured to: send, by using an overlay tunnel established to a gateway corresponding to the active server, a packet to the gateway corresponding to the active server, and when the active server and/or the gateway corresponding to the active server are/is faulty, send, by the customer premise equipment by using an overlay tunnel established to a gateway corresponding to the standby server, a packet to the gateway corresponding to the standby server.

26. The apparatus according to any one of claims 23 to 25, wherein when one server corresponds to at least two gateways, the establishment unit is specifically configured to separately establish, based on the overlay virtual network instance, an overlay tunnel with each gateway corresponding to the server; and
the sending unit is specifically configured to send the packet to the corresponding gateway by using at least one of the overlay tunnels.

27. The apparatus according to claim 26, wherein the at least two gateways comprise an active gateway and a standby gateway, and the sending unit is specifically configured to: send a packet to the active gateway by using an overlay tunnel established to the active gateway, and when the active gateway is faulty, send a packet to the standby gateway by using an overlay tunnel established to the standby gateway.

28. The apparatus according to any one of claims 24 to 27, wherein when the customer premise equipment has at least two WAN ports, each WAN port has a corresponding underlay virtual network instance, and the establishment unit is specifically configured to separately establish, based on the overlay virtual network instance by using each WAN port, an overlay tunnel with the gateway corresponding to the server; and
the sending unit is specifically configured to send the packet to the gateway by using at least one of the overlay tunnels.

29. The apparatus according to claim 28, wherein when the two WAN ports comprise an active WAN port and a standby WAN port, the sending unit is specifically configured to: send a packet to the gateway by using an overlay tunnel established between the active WAN port and the gateway, and when the active WAN port is faulty, send a packet to the gateway by using an overlay tunnel established between the standby WAN port and the gateway.

30. The apparatus according to any one of claims 23 to 29, wherein when an underlay network type corresponding to the WAN port of the customer premise equipment is a preset network type, the apparatus further comprises:
an encryption unit, configured to: before the packet is sent to the gateway by using the overlay tunnel, encrypt the packet to obtain the encrypted packet.

31. The apparatus according to any one of claims 22 to 30, wherein the establishment unit is specifically configured to establish the inner-loop tunnel with an underlay virtual network instance based on the overlay virtual network instance, wherein the underlay virtual network instance is associated with the WAN port of the customer premise equipment, and the WAN port interworks with the server by using an underlay network; and
the sending unit is specifically configured to send the packet to the server by using the inner-loop tunnel and the underlay network.

32. The apparatus according to claim 31, wherein when the apparatus has at least two WAN ports and different WAN ports are bound to different underlay virtual network instances, the establishment unit is specifically configured to separately establish, based on the overlay virtual network instance, an inner-loop tunnel with an underlay virtual network instance corresponding to each WAN port; and
the sending unit is specifically configured to send the packet to the server by using at least one of the inner-loop tunnels and an underlay network corresponding to the inner-loop tunnel.

33. The apparatus according to claim 32, wherein the at least two WAN ports comprise the active WAN port and the standby WAN port, an inner-loop tunnel established with an underlay virtual network instance corresponding to the active WAN port is an active inner-loop tunnel, an inner-loop tunnel established with an underlay virtual network instance corresponding to the standby WAN port is a standby inner-loop tunnel, and the sending unit is specifically configured to: send the packet to the server by using the active inner-loop tunnel and an underlay network corresponding to the active WAN port, and when the active WAN port is faulty, send the packet to the server by using the standby inner-loop tunnel and an underlay network corresponding to the standby WAN port.

34. The apparatus according to any one of claims 22 to 33, wherein when an overlay tunnel and an inner-loop tunnel exist, a priority of the overlay tunnel is higher than that of the inner-loop tunnel.

35. The apparatus according to claim 34, wherein when the gateway corresponding to the server side is faulty, the apparatus further comprises:
a switching unit, configured to switch from the overlay tunnel to the inner-loop tunnel.

36. The apparatus according to any one of claims 22 to 35, wherein the overlay virtual network instance is a service virtual network instance in the communications apparatus, and the service virtual network instance is an overlay virtual network instance; or the overlay virtual network instance is an overlay virtual network instance newly established by the communications apparatus.

37. The apparatus according to any one of claims 21 to 36, wherein the packet further comprises an IP address corresponding to the WAN port.

38. The apparatus according to any one of claims 21 to 37, wherein when network address translation exists in a network connected to the WAN port corresponding to the communications apparatus, the IP address configured for the loopback interface is a public network IP address.

39. A communications apparatus, wherein the apparatus comprises:
a receiving unit, configured to receive a packet sent by customer premise equipment, wherein the packet comprises an IP address of a loopback interface in the customer premise equipment, and the loopback interface is located in an overlay virtual network instance in the customer premise equipment;
a parsing unit, configured to parse the packet to obtain the IP address; and
a sending unit, configured to send the IP address to a server, so that the server identifies the customer premise equipment based on the IP address.

40. The apparatus according to claim 39, wherein when the packet is an encrypted packet, the apparatus further comprises:
a decryption unit, configured to decrypt the packet before the packet is parsed.

41. A communications device, wherein the device comprises a processor and a memory, wherein
the memory is configured to store instructions; and
the processor is configured to execute the instructions in the memory, to perform the method according to any one of claims 1 to 18.

42. A gateway, wherein the gateway comprises a processor and a memory, wherein
the memory is configured to store instructions; and
the processor is configured to execute the instructions in the memory, to perform the method according to claim 19 or 20.

43. A communications system, wherein the system comprises customer premise equipment and a server, wherein
the customer premise equipment is configured to: create a loopback interface in an overlay virtual network instance, and configure an IP address for the loopback interface; establish a transmission path to a server side based on the overlay virtual network instance; and send a packet to a server by using the transmission path, wherein the packet comprises at least the IP address; and
the server is configured to identify the customer premise equipment based on the IP address in the packet.

44. The system according to claim 43, wherein the customer premise equipment is specifically configured to: establish an overlay tunnel from the overlay virtual network instance to the server side; and/or establish an inner-loop tunnel between the overlay virtual network instance and a virtual network instance interworking with the server side.

45. The system according to claim 44, wherein the system further comprises a gateway, the gateway communicates with the server, and the customer premise equipment is specifically configured to: establish an overlay tunnel from the overlay virtual network instance to the gateway corresponding to the server; and send the packet to the gateway by using the overlay tunnel; and
the gateway is configured to: parse the packet to obtain the IP address, and send the IP address to the server.

46. The system according to claim 45, wherein the system comprises an active gateway and a standby gateway, the active gateway and the standby gateway both communicate with the server, and the customer premise equipment is specifically configured to: send a packet to the active gateway by using an overlay tunnel established to the active gateway, and when the active gateway is faulty, send a packet to the standby gateway by using an overlay tunnel established to the standby gateway.

47. The system according to claim 44 or 45, wherein the customer premise equipment is specifically configured to: establish the inner-loop tunnel with an underlay virtual network instance based on the overlay virtual network instance, wherein the underlay virtual network instance is associated with a WAN port of the customer premise equipment, and the WAN port interworks with the server by using an underlay network; and send the packet to the server by using the inner-loop tunnel and the underlay network.

48. The system according to claim 44, wherein when a gateway corresponding to the server side is faulty, the customer premise equipment is further configured to switch from the overlay tunnel to the inner-loop tunnel.

49. A computer-readable storage medium, comprising instructions, wherein when the instructions are run on a computer, the computer is enabled to perform the method according to any one of claims 1 to 20.
